# EUROPEAN PATENT SPECIFICATION

(11) **EP 3 637 613 B1**
(45) Date of publication and mention of the grant of the patent: **05.10.2022**
(21) Application number: 18813092.6
(22) Date of filing: 05.06.2018
(51) Int. Cl.: H02P 21/00, H02P 27/08

(54) **MOTOR DRIVING APPARATUS**
MOTORANSTEUERUNGSVORRICHTUNG
APPAREIL D'ENTRAÎNEMENT D'UN MOTEUR

(30) Priority: 07.06.2017 KR 20170070945; 17.08.2017 KR 20170104384
(43) Date of publication of application: 15.04.2020
(73) Proprietor: LG Electronics Inc., Seoul 07336 (KR)
(72) Inventor: KIM, Kwang Sik, Seoul 08592 (KR); LEE, Chungill, Seoul 08592 (KR); CHO, Seokhee, Seoul 08592 (KR)
(74) Representative: Vossius & Partner Patentanwälte Rechtsanwälte mbB
(86) International application number: PCT/KR2018/006429
(87) International publication number: WO 2018/226025

(56) References cited:
- EP-A1- 2 728 739
- JP-A- 2013 059 233
- JP-A- 2014 011 870
- KR-A- 20080 015 029
- KR-A- 20090 000 151
- KR-A- 20110 030 304
- KR-A- 20140 090 471
- US-A1- 2015 015 171

## Description

### [Technical Field]

The present invention relates to a motor driving apparatus, and more particularly, to a motor driving apparatus which selectively compensates in-phase overmodulation or minimum distance overmodulation depending on an instruction velocity when an output voltage instruction value of an inverter is an overmodulated voltage.

### [Background Art]

Small-sized precise control motors are roughly classified into an alternating current (AC) motor, a direct current (DC) motor, a brushless DC (BLDC) motor, and a reluctance motor.

Such small-sized motors have been used in many places such as an audio and visual (AV) device, a computer, a home appliance, housing facilities, industrial fields, and the like. Particularly, the field of home appliances forms the largest market of small-sized motors. Home appliances have gradually been improved to have high quality such that a small size, low noise, low power consumption, and the like of a driven motor are necessary.

Among these, a BLDC motor is a motor without a brush and a commutator which basically does not have a mechanical frictional loss, a flame, or noises and is excellent in controlling a velocity or torque. Also, since a velocity is controlled without a loss and efficiency is high for a small-sized motor, such BLDC motors are generally used in home appliance products.

The BLDC motor may include an inverter providing three-phase AC voltages and a control unit controlling an output voltage of the inverter. Here, the control unit may control the inverter using a pulse width modulation (PWM) controlling method. In detail, the control unit may control the output voltage of the inverter using a space vector PWM (SVPWM). However, since a voltage supplied to a motor driving apparatus is restricted, a limitation may be present in a range of an output voltage capable of being linearly output.

In order to overcome the limitation, the control unit may improve the output voltage and control performance using an overmodulation compensation method. As the overmodulation compensation method used in the control unit, there may be an in-phase overmodulation compensation method and a minimum distance overmodulation compensation method.

When a motor driving apparatus uses the in-phase overmodulation compensation method, a voltage ripple and a harmonic wave may be minimized such that control performance may be increased. However, a level of output power is decreased. On the other hand, when the motor driving apparatus uses the minimum distance overmodulation compensation method, an error in an output voltage may be minimized but a voltage ripple and a harmonic wave increase.

Accordingly, manufacturers have a difficulty of considering a trade-off relationship between the in-phase overmodulation compensation method and the minimum distance overmodulation compensation method while operating a motor driving apparatus.

### [Disclosure]

KR 2014 0090471 A relates to an apparatus for driving a motor including: a rectifier to rectify an input alternating current voltage; an inverter to convert the rectified voltage to drive the motor; a capacitor provided between the rectifier and the inverter; and a controller to control an operation of a switching element in the inverter. US 2015/015171 A1 relates to an apparatus for controlling a variable of a rotary machine based on an AC voltage supplied to the rotary machine via a switching element of a power converter, and a generator that generates a drive signal including an on-off pattern of the switching element.

### [Technical Problem]

The present invention is directed to providing a motor driving apparatus capable of increasing control performance using an in-phase overmodulation compensation method when an output voltage instruction value used for controlling of an inverter is relatively small and capable of implementing high power using a minimum distance overmodulation compensation method when the output voltage instruction value is relatively great.

### [Technical Solution]

The invention is specified by the independent claim. Preferred embodiments are defined in the dependent claims.

One aspect of the present invention provides a motor driving apparatus including an inverter which drives a motor using an alternating current (AC) voltage and a control unit which controls an operation of switching elements included in the inverter. Here, when an output voltage instruction value vector used in controlling of the inverter exceeds a predetermined space vector region, the control unit operates in one of first and second modes which differ from each other according to an instruction velocity. Here, the control unit in the first mode performs an in-phase overmodulation compensation operation of reducing a size of the output voltage instruction value vector while maintaining a phase of the output voltage instruction value vector. On the other hand, the control unit in the second mode performs a minimum distance overmodulation compensation operation of changing the output voltage instruction value vector with a minimum distance point between the output voltage instruction value vector and the space vector region.

### [Advantageous Effects]

A motor driving apparatus according to the present invention may improve control performance by reducing a voltage ripple and a harmonic wave using an in-phase overmodulation compensation method when an output voltage instruction value of an inverter enters an overmodulation region. On the other hand, when it is necessary to operate the motor driving apparatus at a relatively high speed, an average output voltage is increased using a minimum distance overmodulation compensation method such that the motor driving apparatus may be enabled to be driven at a high speed. Consequently, the motor driving apparatus may improve stability in operation and secure high power necessary for high-speed operation by selecting the most efficient overmodulation compensation method depending on a situation.

In addition to the above effects, detailed effects of the present invention will be disclosed in the following detailed description for implementing the present invention.

### [Description of Drawings]

FIG. 1 is a block diagram of a motor driving apparatus according to one embodiment of the present invention.
FIG. 2 is a block diagram illustrating elements of a control unit of FIG. 1.
FIG. 3 is a circuit diagram illustrating an inverter of FIG. 1.
FIG. 4 is a view illustrating a space vector-based pulse width modulation method.
FIGS. 5 and 6 are views illustrating an in-phase overmodulation compensation method.
FIGS. 7 and 8 are views illustrating a minimum distance overmodulation compensation method.
FIGS. 9 and 10 are views illustrating a method of generating, by the control unit of FIG. 1, a voltage compensation instruction value.
FIG. 11 is a flowchart illustrating a method of operating a motor driving apparatus according to one embodiment of the present invention.
FIG. 12 is a flowchart illustrating a method of operating a motor driving apparatus according to another embodiment of the present invention.
FIG. 13 is a flowchart illustrating a method of operating a motor driving apparatus according to still another embodiment of the present invention.
FIGS. 14 to 16 are views illustrating terminal voltage waveforms according to overmodulation compensation of the motor driving apparatus according to some embodiments of the present invention.

### [Modes of the Invention]

The advantages and features of the present invention and a method of achieving the same will become clear with reference to the attached drawings and following embodiments which will be described below in detail. However, the present invention is not limited to the embodiments which will be described below and may be implemented as a variety of different shapes. It should be noted that the embodiments are provided merely for completing the disclosure of the present invention and allowing one of ordinary skill in the art to understand the complete scope of the present invention and the present invention will be defined by the claims. Throughout the specification, like reference numerals refer to like elements.

Unless defined otherwise, the terms (including technical and scientific terms) used herein may be used as meanings capable of being commonly understood by one of ordinary skill in the art. Also, terms defined in generally used dictionaries, unless defined particularly, are not to be ideally or excessively construed.

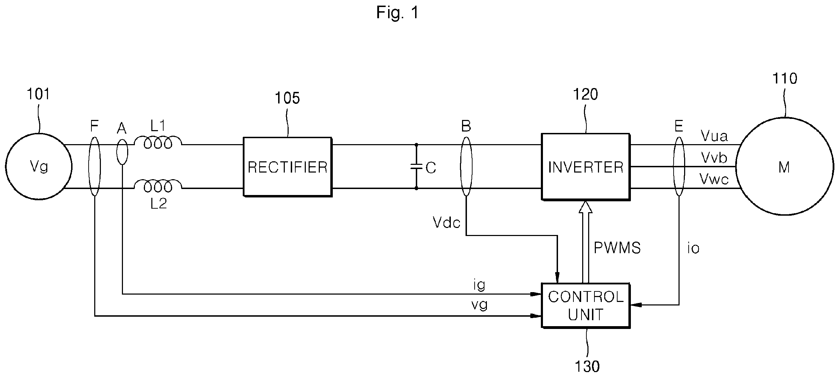

Hereinafter, motor driving apparatuses according to some embodiments of the present invention will be described with reference to FIGS. 1 to 16.

FIG. 1 is a block diagram of a motor driving apparatus according to one embodiment of the present invention.

Referring to FIG. 1, a motor driving apparatus according to one embodiment of the present invention may include a motor 110, an inverter 120, and a control unit 130.

The motor 110 may include a stator on which a three-phase coil (not shown) are wound and a rotor which is disposed in the stator and rotates due to a magnetic field generated by the three-phase coil. When three-phase alternating current (AC) voltages Vua, Vvb, and Vwc are supplied from the inverter 120 to the three-phase coil, a permanent magnet included in a rotor rotates according to a magnetic field generated by the three-phase coil in the motor 110. However, the present invention is not limited to a three-phase motor operated by the three-phase coil and, for example, may further include a single-phase motor using a single-phase coil. Hereinafter, the features of the present invention will be described on the basis of the three-phase motor.

The motor 110 may include an induction motor, a brushless direct current (BLDC) motor, a reluctance motor, and the like. For example, the motor 110 may include a surface-mounted permanent magnet synchronous motor (SMPMSM), an interior permanent magnet synchronous motor (IPMSM), a synchronous reluctance motor (SynRM), and the like.

The inverter 120 may include three-phase switch elements (not shown). When an operation control signal (hereinafter, referred to as a pulse width modulation (PWM) signal) supplied from the control unit 130 is input, the three-phase switch elements may convert an input DC voltage Vdc into three-phase AC voltages Vua, Vvb, and Vwc by switching on and off and provide the three-phase AC voltages Vua, Vvb, and Vwc to the three-phase coil. The three-phase switch elements will be described below in detail.

When a target instruction value is input, the control unit 130 may output a PWM signal PWMS which determines an on-time section with respect to an on operation and an off-time section with respect to an off operation of each of the three-phase switch elements on the basis of a target instruction value and an electrical degree position of the rotor.

The motor driving apparatus may further include an input current detection portion A, a DC terminal voltage detection portion B, a DC terminal capacitor C, an electric motor current detection portion E, an input voltage detection portion F, and inductors L1 and L2. However, the present invention is not limited thereto and some of the above elements may be omitted.

The input current detection portion A may detect an input current ig input from a commercial AC power source 101. To this end, as the input current detection portion A, a current transformer (CT), a shunt resistor, and the like may be used. The detected input current ig is a pulse-formed discrete signal and may be input to the control unit 130 to control power.

The input voltage detection portion F may detect an input voltage vg input from the commercial AC power source 101. To this end, the input voltage detection portion F may include a resistor element, an amplifier, and the like. The detected input voltage vg is a pulse-formed discrete signal that may be input to the control unit 130 to control power.

The inductors L1 and L2 may be disposed between the commercial AC power source 101 and a rectifier 105 and perform operations such as noise removal and the like.

The rectifier 105 rectifies and outputs power of the commercial AC power source 101 passing through the inductors L1 and L2. For example, the rectifier 105 may include a full-bridge diode with four connected diodes but a variety of modifications are applicable.

The capacitor C stores input power. In the drawings, as the DC terminal capacitor C, one element is exemplified but a plurality of elements may be provided to secure element stability.

The DC terminal voltage detection portion B may detect DC terminal voltage Vdc which is present both ends of the capacitor C. To this end, the DC terminal voltage detection portion B may include a resistor element, an amplifier, and the like. The detected DC terminal voltage Vdc is a pulse-formed discrete signal and may be input to the control unit 130 to generate the PWM signal PWMS.

The electrical motor current detection portion E detects an output current io flowing between the inverter 120 and the three-phase motor 110. That is, a current flowing through the three-phase motor 110 is detected. The electrical motor current detection portion E may detect all of output currents ia, ib, and ic of phases or may detect output currents of two phases using three-phase balance.

The electrical motor current detection portion E may be located between the inverter 120 and the three-phase motor 110, and a CT, a shunt resistor, and the like may be used to detect currents.

Accordingly, the control unit 130 may control an operation of the inverter 120 using the input current ig detected by the input current detection portion A, the input voltage vg detected by the input voltage detection portion F, the DC terminal voltage Vdc detected by the DC terminal voltage detection portion B, and the output current io detected by the electrical motor current detection portion E.

The detected output current io is a pulse-formed discrete signal that may be applied to the control unit 130 so that the PWM signal PWMS is generated on the basis of the detected output current io. Hereinafter, it is assumed that the detected output current io is three-phase currents ia, ib, and ic.

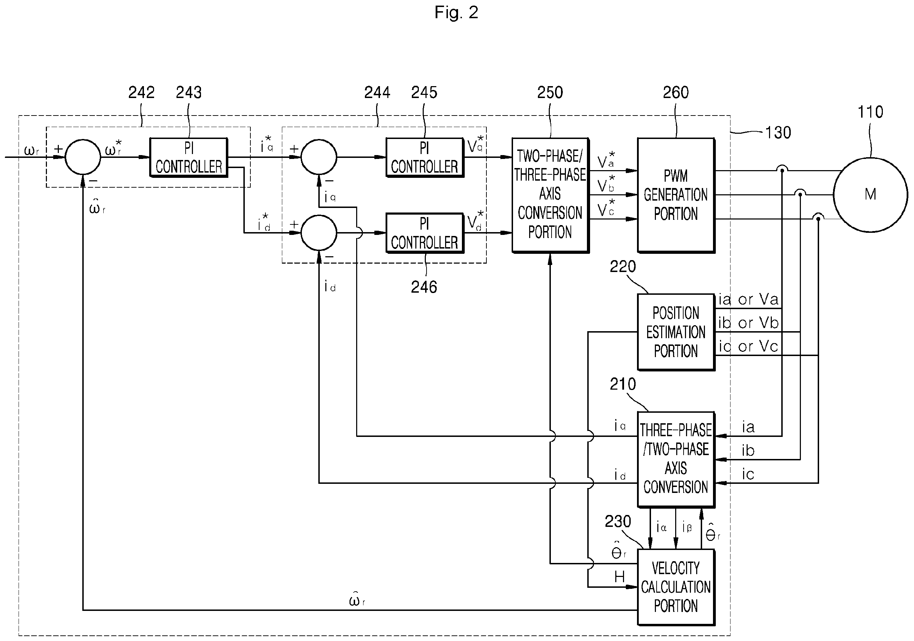

FIG. 2 is a block diagram illustrating elements of the control unit of FIG. 1.

Referring to FIG. 2, the control unit 130 may include a three-phase/two-phase axis conversion portion 210, a position estimation portion 220, a velocity calculation portion 230, an instruction value generation portion 240, a two-phase/three-phase axis conversion portion 250, and a signal generation portion (hereinafter, referred to as a PWM generation portion) 260.

The three-phase/two-phase axis conversion portion 210 receives the three-phase currents ia, ib, and ic output from the motor 110 and converts the three-phase currents ia, ib, and ic into two-phase currents iα and iβ in a stationary reference frame.

Meanwhile, the three-phase/two-phase axis conversion portion 210 may convert the two-phase currents iα and iβ in a stationary reference frame into two-phase currents id and iq in a rotating reference frame.

The position estimation portion 220 may detect at least one of the three-phase currents ia, ib, and ic and three-phase voltages Va, Vb, and Vc and estimate a position H of the rotor included in the motor 110.

The velocity calculation portion 230 may calculate a current velocity ω^{^}ᵣ of the rotor on the basis of the position H estimated by the position estimation portion 220 and at least one of the three-phase voltages Va, Vb, and Vc. That is, the velocity calculation portion 230 may calculate the current velocity ω^{^}ᵣ by dividing the position H by time.

Also, the velocity calculation portion 230 may output an electrical degree position θ^r and the current velocity ω^{^}ᵣ which are calculated on the basis of the position H.

The instruction value generation portion 240 may include a current instruction generation portion 242 and a voltage instruction generation portion 244.

The current instruction generation portion 242 calculates a velocity instruction value ω^{∗}ᵣ on the basis of the calculated current velocity ω^{^}ᵣ and an instruction velocity ωᵣ corresponding to an input target instruction value.

Then, the current instruction generation portion 242 generates a current instruction value i^{∗}_{q} on the basis of the velocity instruction value ω^{∗}ᵣ.

For example, the current instruction generation portion 242 may generate the current instruction value i^{∗}_{q} on the basis of the velocity instruction value ω^{∗}ᵣ that is a difference between the current velocity ω^{^}ᵣ and an instruction velocity ωᵣ while a PI controller 243 performs PI control. The current instruction generation portion 242 may also generate a d-axis current instruction value i^{∗}_{d} while a q-axis current instruction value i^{∗}_{q} is generated. Meanwhile, a value of the d-axis current instruction value i^{∗}_{d} may be set as 0.

Also, the current instruction generation portion 242 may further include a limiter (not shown) which restricts a level of the current instruction value i^{∗}_{q} from exceeding an allowable range.

The voltage instruction generation portion 244 generates d-axis and q-axis voltage instruction values v^{∗}_{d} and v^{∗}_{q} on the basis of d-axis and q-axis currents i_{d} and i_{q} which are axis-converted into a rotating reference frame and the current instruction values i^{∗}_{d} and i^{∗}_{q} generated by the current instruction generation portion 242.

For example, the voltage instruction generation portion 244 may generate the q-axis voltage instruction value v^{∗}_{q} on the basis of a difference between a q-axis current i_{q} and the q-axis current instruction value i^{∗}_{q} while the PI controller 245 performs PI control.

Also, the voltage instruction generation portion 244 may generate the d-axis voltage instruction value v^{∗}_{d} on the basis of a difference between a d-axis current i_{d} and the d-axis current instruction value i^{∗}_{d} while the PI controller 246 performs PI control.

Meanwhile, a value of the d-axis voltage instruction value v^{∗}_{d} may be set as 0 corresponding to a case in which a value of the d-axis current instruction value i^{∗}_{d} is set as 0.

Meanwhile, the voltage instruction generation portion 244 may further include a limiter (not shown) which restricts levels of the d-axis and q-axis voltage instruction values v^{∗}_{d} and v^{∗}_{q} from exceeding allowable ranges.

Meanwhile, the generated d-axis and q-axis voltage instruction values v^{∗}_{d} and v^{∗}_{q} are input to the two-phase/three-phase axis conversion portion 250.

The two-phase/three-phase axis conversion portion 250 receives the electrical degree position θ^{^}ᵣ calculated by the velocity calculation portion 230 and the d-axis and q-axis voltage instruction values v^{∗}_{d} and v^{∗}_{q} and performs axial conversion.

First, the two-phase/three-phase axis conversion portion 250 performs conversion from a two-phase rotating reference frame into a two-phase stationary reference frame. Here, the electrical degree position θ^{^}ᵣ calculated by the velocity calculation portion 230 may be used.

First, the two-phase/three-phase axis conversion portion 250 performs conversion from a two-phase rotating reference frame into a two-phase stationary reference frame. Through the conversion, the two-phase/three-phase axis conversion portion 250 outputs three-phase output voltage instruction values v^{∗}a, v^{∗}b, and v^{∗}c.

The PWM generation portion 260 generates and outputs a PWM signal PWMS for an inverter according to a PWM method on the basis of the three-phase output voltage instruction values v*a, v*b, and v*c.

The PWM signal PWMS may be converted into a gate driving signal at a gate driving portion (not shown) and be input to gates of three-phase elements in the inverter 120. Accordingly, the three-phase switching elements in the inverter 120 are enabled to perform a switching operation.

Here, the PWM generation portion 260 may control the switching operation of the three-phase switch elements by varying an on-time section and an off-time section of the PWM signal PWMS on the basis of the electrical degree position θ^{^}ᵣ and three-phase voltages Va, Vb, and Vc.

In the PWM generation portion 260, a plurality of algorithms are set for generating the PWM signal PWMS. The PWM generation portion 260 may generate an output voltage instruction value vector on the basis of three-phase output voltage instruction values v^{∗}a, v^{∗}b, and v^{∗}c. The PWM generation portion 260 may control an output voltage of the inverter 120 using a space vector PWM (SVPWM). Here, the PWM generation portion 260 determines whether the output voltage instruction value vector corresponds to an overmodulated voltage by comparing a space vector region with the output voltage instruction value vector. In detail, the PWM generation portion 260 determines whether the output voltage instruction value vector exceeds a predetermined space vector region.

Subsequently, the PWM generation portion 260 may operate in a first mode or a second mode which are different from each other according to an input instruction velocity ωᵣ when an output voltage instruction value corresponds to the overmodulated voltage.

Here, in the first mode, the PWM generation portion 260 performs an in-phase overmodulation compensation operation of reducing a size of the output voltage instruction value vector while maintaining a phase of the output voltage instruction value vector. On the other hand, in the second mode, the PWM generation portion 260 performs a minimum distance overmodulation compensation operation of changing the output voltage instruction value vector with a minimum distance point between the output voltage instruction value vector and the space vector region.

For example, the PWM generation portion 260 may compare the instruction velocity ωᵣ and a velocity reference value ω_{r_limit} and operate in the first mode when the instruction velocity ωᵣ is less than or equal to the velocity reference value ω_{r_limit} and may operate in the second mode when the instruction velocity ωᵣ is greater than the velocity reference value ω_{r_limit}. However, the present invention is not limited thereto, and a detailed description will be set forth below.

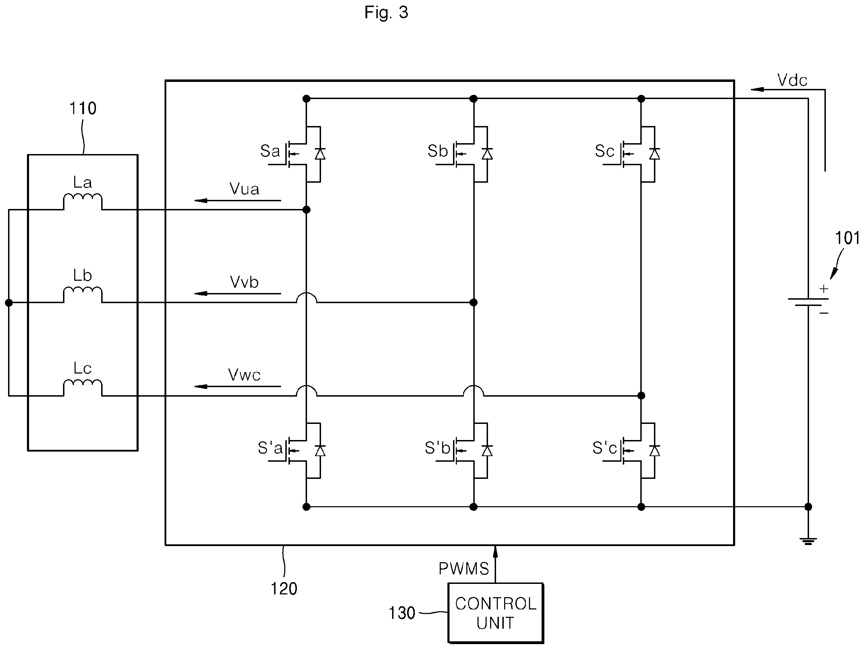

FIG. 3 is a circuit diagram illustrating the inverter of FIG. 1.

Referring to FIG. 3, the inverter 120 according to one embodiment of the present invention may include three-phase switch elements and may convert a DC voltage Vdc input by switching on and off according to the PWM signal PWMS supplied from the control unit 130 into three-phase AC voltages Vua, Vvb, and Vwc having certain frequencies or duties and output the three-phase AC voltages Vua, Vvb, and Vwc to the motor 110.

In the three-phase switch elements, first to third upper arm switches Sa, Sb, and Sc and first to third lower arm switches S'a, S'b, and S'c, which are connected in series, may form three pairs, and a total of three pairs of first to third upper arm switches and first to third lower arm switches Sa&S'a, Sb&S'b, and Sc&S'c may be connected in parallel.

That is, a first pair of upper and lower arm switches Sa and S'a supplies a first-phase AC voltage Vua among three-phase AC voltages Vua, Vvb, and Vwc to a first-phase coil La among three-phase coils La, Lb, and Lc of the motor 110.

Also, a second pair of upper and lower arm switches Sb and S'b may supply a second-phase AC voltage Vvb to a second-phase coil Lb, and a third pair of upper and lower arm switches Sc and S'c may supply a third-phase AC voltage Vwc to a third-phase coil Lc.

Here, each of the first to third upper arm switches Sa, Sb, and Sc and the first to third lower arm switches S'a, S'b, and S'b are turned on and off once for each rotation of the rotor according to the input PWM signal PWMS to supply the three-phase AC voltages Vua, Vvb, and Vwc to the three-phase coils La, Lb, and Lc, respectively, so as to control the operation of the motor 110.

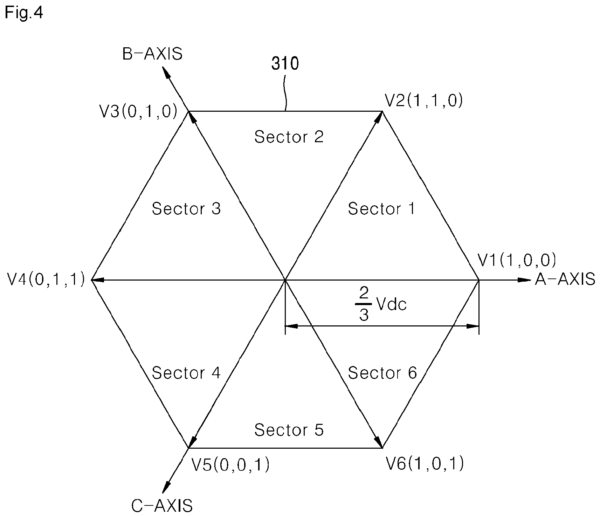

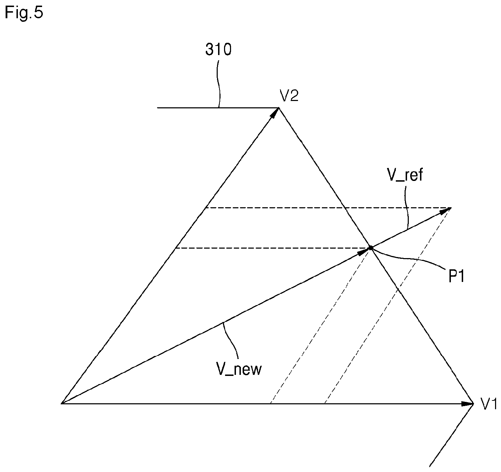

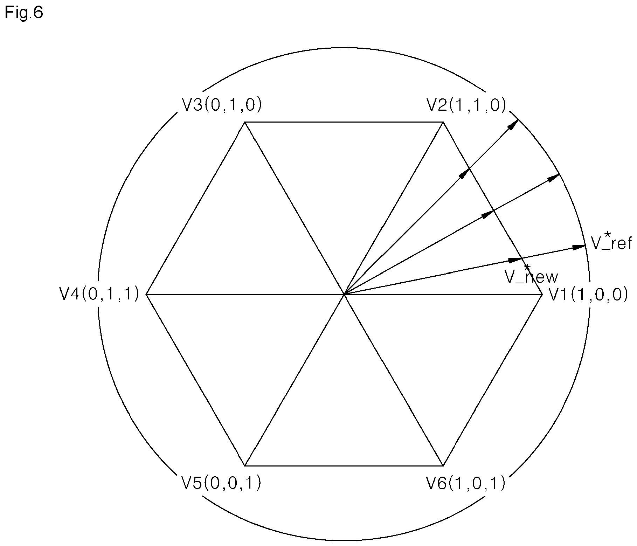

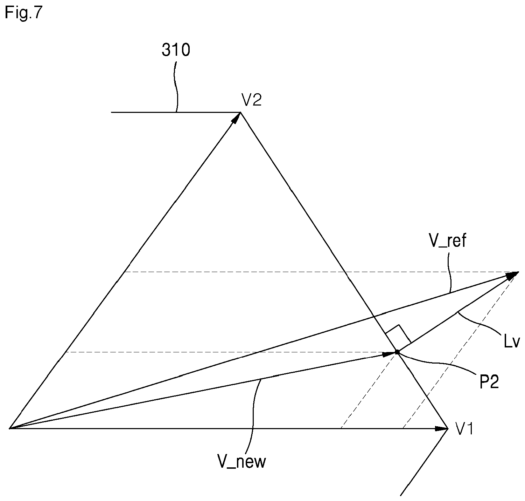

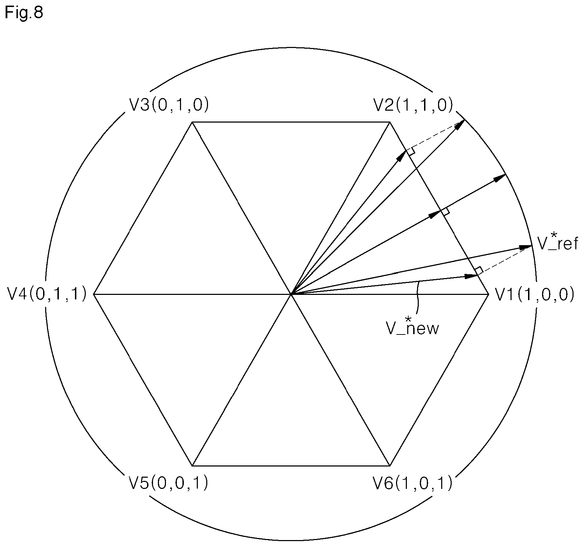

FIG. 4 is a view illustrating a space vector-based pulse width modulation method. FIGS. 5 and 6 are views illustrating an in-phase overmodulation compensation method. FIGS. 7 and 8 are views illustrating a minimum distance overmodulation compensation method.

Referring to FIG. 4, in a space vector region 310, an a axis, a b axis, and a c axis indicate vector components (1,0,0), (0,1,0), and (0,0,1) corresponding to three phases of the motor. The motor driving apparatus of the present invention may perform a pulse width modulation method using the space vector region 310.

The inverter 120 may provide an output voltage to the motor 110 on the basis of the output voltage instruction value vector provided by the control unit 130. Accordingly, the output voltage output by the inverter 120 may vary according to the output voltage instruction value vector provided by the control unit 130.

The output voltage output by the inverter 120 may be output in the space vector region 310 having a hexagonal shape. A voltage exceeding the space vector region, that is, a voltage exceeding a voltage capable of being output by the inverter 120, may be referred to as an overmodulated voltage. The control unit 130 may perform the overmodulation compensation method to allow the output voltage instruction value vector to be located within the space vector region.

As the overmodulation compensation method, an in-phase overmodulation compensation method or a minimum distance overmodulation compensation method may be used.

First, referring to FIGS. 5 and 6, the in-phase overmodulation compensation method means a method of reducing a size of a vector while maintaining the same phase with respect to an overmodulation vector V-ref based on a first voltage vector V1 and a second voltage vector V2.

Accordingly, the inverter 120 outputs, with respect to the overmodulation vector V ref, a maximum voltage capable of being output, that is, a voltage corresponding to a boundary point P1 of the space vector region 310 as a valid vector V_new.

The in-phase overmodulation compensation method may relatively minimize a voltage ripple and a harmonic wave in comparison to the minimum distance overmodulation compensation method such that control performance of the motor driving apparatus may be increased.

However, since the in-phase overmodulation compensation method determines the valid vector V ref in consideration of only the output voltage among factors related to output power of the inverter 120, the output power of the inverter 120 may not be precisely controlled. Accordingly, the output power output by the inverter 120 may be distorted and a level of the output power may decrease.

On the other hand, referring to FIGS. 7 and 8, the minimum distance overmodulation compensation method means a method of setting a minimum distance point P2 between an overmodulation vector V ref and the space vector region 310 as an output voltage instruction value vector with respect to the overmodulation vector V ref based on the first voltage vector V1 and the second voltage vector V2.

Accordingly, the inverter 120 outputs, with respect to the overmodulation vector V ref, a maximum voltage capable of being output, that is, a voltage corresponding to a boundary point P2 of the space vector region 310 as a valid vector V_new.

However, in the case of the minimum distance overmodulation compensation method, although there is a phase difference between the overmodulation vector V-ref and the valid vector V_new, an error of a level of the output voltage may be minimized. Accordingly, when the minimum distance overmodulation compensation method is used, a driving velocity of the motor 110 may be improved, and the motor 110 may be operated with high RPM by increasing an average output voltage.

However, in the case of the minimum distance overmodulation compensation method, since a difference occurs in phase in comparison to an output voltage before the algorithm is applied, there are disadvantages such as an increase in a voltage ripple and an increase in a harmonic wave.

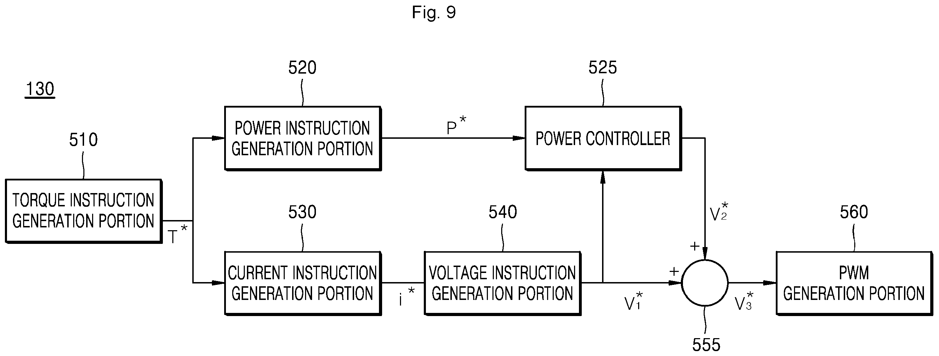

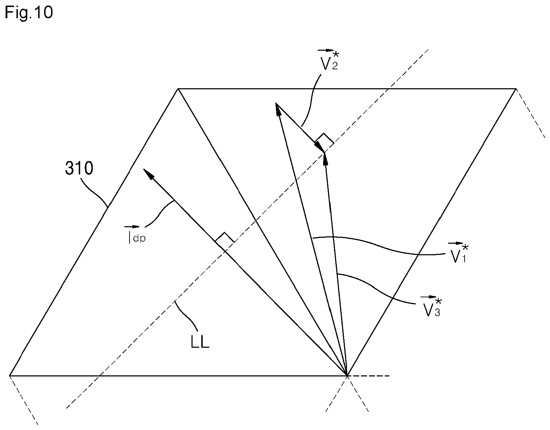

FIGS. 9 and 10 are views illustrating a method of generating, by the control unit of FIG. 1, a voltage compensation instruction value.

Referring to FIGS. 9 and 10, the control unit 130 may include a torque instruction generation portion 510, a power instruction generation portion 520, a power controller 525, a current instruction generation portion 530, a voltage instruction generation portion 540, an adder 555, and a switching control signal output portion 560. Meanwhile, the components described above with reference to FIG. 2 may be further included. Hereafter, units illustrated in FIG. 9 will be mainly described.

The torque instruction generation portion 510 may output a torque instruction value T^{∗} for rotating the motor 110 on the basis of a current velocity ω^{^}ᵣ and a velocity instruction value ω^{∗}ᵣ. Particularly, the torque instruction generation portion 510 may output an average torque instruction value. Meanwhile, the current velocity ω^{^}ᵣ may be calculated on the basis of the output current io described above as flowing through the electrical motor 150 or the position H.

The current instruction generation portion 530 may generate a current instruction value I^{∗} on the basis of the torque instruction value T^{∗}. Here, the current instruction value I^{∗} may have a meaning including a d-axis current instruction value and a q-axis current instruction value of a stationary reference frame.

The voltage instruction generation portion 540 may generate a first voltage instruction value V^{∗}₁ on the basis of the current instruction value I^{∗} and an output current actually flowing through the electrical motor. Here, the first voltage instruction value V^{∗}₁ may have a meaning including a d-axis voltage instruction value and a q-axis voltage instruction value of a stationary reference frame.

Meanwhile, the power instruction generation portion 520 generates and outputs an output power instruction value P^{∗} on the basis of an input voltage Vg, the torque instruction value T^{∗}, the current velocity ω^{^}ᵣ, and a DC terminal voltage Vdc detected by the DC terminal voltage detection portion.

Subsequently, the power controller 525 may control power on the basis of the output power instruction value P^{∗} input by the inverter. That is, the power controller 525 may generate a second voltage instruction value V^{∗}₂ on the basis of the inverter output power instruction value P^{∗}. Here, the second voltage instruction value V^{∗}₂ is a compensation voltage instruction value for compensating the first voltage instruction value V^{∗}₁.

The adder 555 adds and outputs the first voltage instruction value V^{∗}₁ and the second voltage instruction value V^{∗}₂.

That is, as a third voltage instruction value, an output voltage instruction value V^{∗}₃ (for example, an output voltage instruction value vector) is output. Accordingly, the third voltage instruction value V^{∗}₃ (that is, an output voltage instruction value vector after compensation) may be calculated by a sum of the first voltage instruction value V^{∗}₁ (that is, an output voltage instruction value vector before compensation) and the second voltage instruction value V^{∗}₂ (that is, a compensation voltage instruction value vector).

Subsequently, the PWM generation portion 560 generates and outputs a PWM signal (PWMS) on the basis of the third voltage instruction value V^{∗}₃. The PWM generation portion 560 may operate substantially equally to the PWM generation portion 260 described above with reference to FIG. 2.

Additionally, a level of inverter power Pinv in the present invention may be determined using an inner product of an output current vector () and an output voltage instruction value vector of the motor. Accordingly, in order to obtain the inverter power Pinv, the output current instruction value vector or the output voltage instruction value vector may be adjusted.

A method of adjusting the output voltage instruction value vector among these may not quickly follow up the output power instruction value P^{∗} due to a delay occurring in the voltage instruction generation portion 540.

Accordingly, although not shown in the drawings, in another embodiment of the present invention, a method of compensating the output voltage instruction value vector may be determined using the output power instruction value P^{∗}. In detail, the PWM generation portion 560 may receive the output power instruction value P^{∗}, compare the output power instruction value P^{∗} with an output power reference value P_limit, and determine which mode the control unit 130 operates in among the above-described first mode or second mode. A detailed description thereof will be set forth.

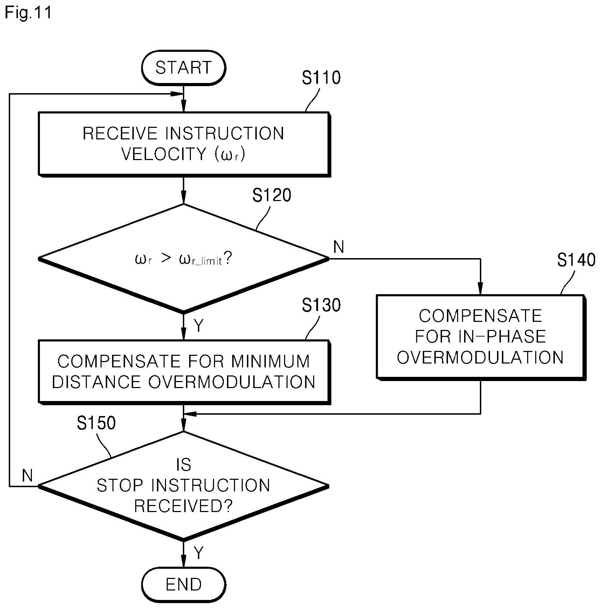

FIG. 11 is a flowchart illustrating a method of operating the motor driving apparatus according to one embodiment of the present invention.

Referring to FIG. 11, the control unit 130 of the motor driving apparatus according to one embodiment of the present invention receives an instruction velocity ωᵣ (S110).

Subsequently, the control unit 130 compares the instruction velocity ωᵣ with a predetermined velocity reference value ω_{r_limit} (S120).

Subsequently, the control unit 130 operates using an in-phase overmodulation compensation method when the instruction velocity ωᵣ is less than or equal to the velocity reference value ω_{r_limit} (S130). That is, when the output voltage instruction value vector provided to the inverter 120 corresponds to an overmodulation vector exceeding a space vector region, the control unit 130 performs compensation of reducing a size of the vector while maintaining the same phase with respect to the overmodulation vector.

Through this, the output voltage instruction value vector may be changed to be located on a boundary of the space vector region and a voltage ripple and a harmonic wave of an output voltage output by the inverter 120 may be minimized such that control performance of the motor driving apparatus may be increased.

On the other hand, the control unit 130 operates using a minimum distance overmodulation compensation method when the instruction velocity ωᵣ is greater than the velocity reference value ω_{r_limit} (S140). That is, when the output voltage instruction value vector provided to the inverter 120 corresponds to the overmodulation vector exceeding the space vector region, the control unit 130 performs compensation of changing the output voltage instruction value vector with a minimum distance point between the output voltage instruction value vector and the space vector region.

Through this, the output voltage instruction value vector may be changed to be located on the boundary of the space vector region while a level of the output voltage may be increased. Accordingly, a mean of the output voltage output by the inverter 120 increases. Accordingly, a level of output power of the inverter 120 may increase and an operation velocity of the motor driving apparatus may increase.

Subsequently, the control unit 130 determines whether a stop instruction is received (S150). When the stop instruction is received, an operation of the motor driving apparatus is stopped. Otherwise, the control unit 130 repetitively performs the above-described operations S110 to S140.

That is, the motor driving apparatus according to one embodiment of the present invention compares the instruction velocity ωᵣ with the velocity reference value ω_{r_limit} and operates in the first mode of performing the in-phase overmodulation compensation when the instruction velocity ωᵣ is less than or equal to the velocity reference value ω_{r_limit}. On the other hand, when the instruction velocity ωᵣ is greater than the velocity reference value ω_{r_limit}, the motor driving apparatus operates in the second mode of performing the minimum distance overmodulation compensation. That is, the motor driving apparatus of the present invention reduces a ripple and a harmonic wave of a voltage through the in-phase overmodulation compensation method in controlling an operation at low velocity while the minimum distance overmodulation compensation method which needs a quick response property is used in controlling an operation at high velocity.

Accordingly, a rotation velocity of the motor 110 in the second mode may be greater than the rotation velocity of the motor 110 in the first mode. Also, a size of the output voltage instruction value vector in the second mode may be greater than or equal to a size of the output voltage instruction value vector in the first mode.

On the other hand, when the output voltage instruction value vector is located within the space vector region (that is, the output voltage instruction value vector is not an overmodulation vector), the control unit 130 may not perform the in-phase overmodulation compensation operation or the minimum distance overmodulation compensation operation.

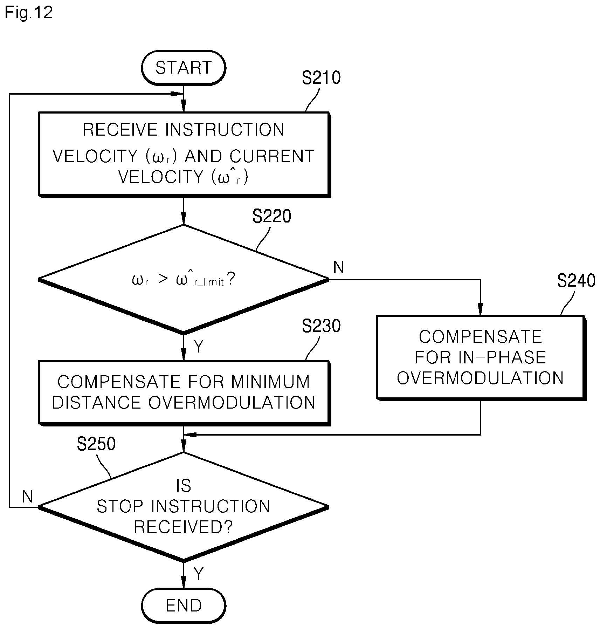

FIG. 12 is a flowchart illustrating a method of operating the motor driving apparatus according to another embodiment of the present invention. For convenience of description, hereafter, a repetitive description of the same content as that of the above-described embodiment will be omitted and differences therebetween will be mainly described.

Referring to FIG. 12, in the motor driving apparatus according to another embodiment of the present invention, the PWM generation portion 260 of the control unit 130 receives an instruction velocity ωᵣ and a current velocity ω^{^}ᵣ of the rotor included in the motor 110 (S210). The current velocity ω^{^}ᵣ of the rotor may be calculated by the control unit 130, and a detailed description thereof which has already been described above will be omitted hereafter.

Subsequently, the control unit 130 compares the instruction velocity ωᵣ with the current velocity ω^{^}ᵣ (S220).

Subsequently, the control unit 130 operates using an in-phase overmodulation compensation method when the instruction velocity ωᵣ is less than or equal to the current velocity ω^{^}ᵣ (S230).

Through this, the output voltage instruction value vector may be changed to be located on a boundary of the space vector region and a voltage ripple and a harmonic wave of an output voltage output by the inverter 120 may be minimized such that control performance of the motor driving apparatus may be increased.

On the other hand, the control unit 130 operates using a minimum distance overmodulation compensation method when the instruction velocity ωᵣ is greater than the current velocity ω^{^}ᵣ (S240).

Through this, the output voltage instruction value vector may be changed to be located on the boundary of the space vector region while a level of the output voltage may be increased. Accordingly, a mean of the output voltage output by the inverter 120 increases. Accordingly, a level of output power of the inverter 120 may increase and an operation velocity of the motor driving apparatus may increase.

Subsequently, the control unit 130 determines whether a stop instruction is received (S250). When the stop instruction is received, an operation of the motor driving apparatus is stopped. Otherwise, the control unit 130 repetitively performs the above-described operations S210 to S240.

That is, the motor driving apparatus according to another embodiment of the present invention compares the instruction velocity ωᵣ with the current velocity ω^{^}ᵣ and operates in the first mode of performing the in-phase overmodulation compensation when the instruction velocity ωᵣ is less than or equal to the current velocity ω^{^}ᵣ. On the other hand, when the instruction velocity ωᵣ is greater than the current velocity ω^{^}ᵣ, the motor driving apparatus operates in the second mode of performing the minimum distance overmodulation compensation. That is, since high voltage output and a quick response property are necessary when the instruction velocity ωᵣ is greater than the current velocity ω^{^}ᵣ, the motor driving apparatus of the present invention may use the minimum distance overmodulation compensation method. In other cases, the in-phase overmodulation compensation method may be used. However, the present invention is not limited thereto.

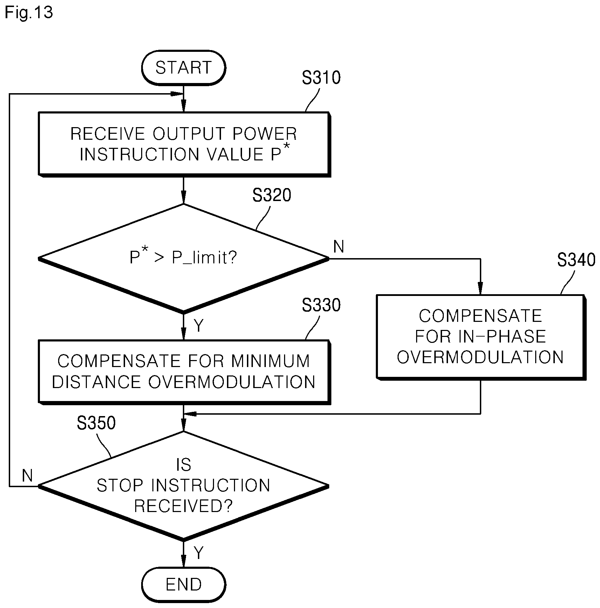

FIG. 13 is a flowchart illustrating a method of operating the motor driving apparatus according to still another embodiment of the present invention. For convenience of description, hereafter, a repetitive description of the same content as that of the above-described embodiments will be omitted and differences therebetween will be mainly described.

Referring to FIG. 13, in the motor driving apparatus according to still another embodiment of the present invention, the PWM generation portion 260 of the control unit 130 receives an output power instruction value P^{∗} (S310). A detailed description thereof which has already been described above will be omitted hereafter.

Subsequently, the control unit 130 compares the output power instruction value P^{∗} with an output power reference value P_limit (S320).

Subsequently, the control unit 130 operates using an in-phase overmodulation compensation method when the output power instruction value P^{∗} is less than or equal to the output power reference value P limit (S330).

Through this, a voltage ripple and a harmonic wave of an output voltage output by the inverter 120 may be minimized such that control performance of the motor driving apparatus may be increased.

On the other hand, the control unit 130 operates using a minimum distance overmodulation compensation method when the output power instruction value P^{∗} is greater than the output power reference value P limit (S340).

Through this, a mean of the output voltage output by the inverter 120 increases. Accordingly, a level of output power of the inverter 120 may increase and an operation velocity of the motor driving apparatus may increase.

Subsequently, the control unit 130 determines whether a stop instruction is received (S350). When the stop instruction is received, an operation of the motor driving apparatus is stopped. Otherwise, the control unit 130 repetitively performs the above-described operations S310 to S340.

That is, the motor driving apparatus according to still another embodiment of the present invention compares the output power instruction value P^{∗} with the output power reference value P limit and operates in a first mode of performing an in-phase overmodulation compensation when the output power instruction value P^{∗} is less than or equal to the output power reference value P limit. On the other hand, when the output power instruction value P^{∗} is greater than the output power reference value P_limit, the motor driving apparatus operates in the second mode of performing the minimum distance overmodulation compensation. That is, since high voltage output and a quick response property are necessary when the output power instruction value P^{∗} is greater than the output power reference value P limit, the motor driving apparatus of the present invention may use the minimum distance overmodulation compensation method. In other cases, the in-phase overmodulation compensation method may be used. However, the present invention is not limited thereto.

Additionally, although not shown in the drawings, the control unit 130 may operate in the second mode when it is necessary to drive the motor 110 at a high speed.

For example, when an instruction velocity ωᵣ is higher than or equal to 80 krpm or a current velocity ω^{^}ᵣ of the motor 110 is higher than or equal to 80 krpm, the control unit 130 may operate in the second mode. However, this is merely an embodiment and the present invention is not limited thereto.

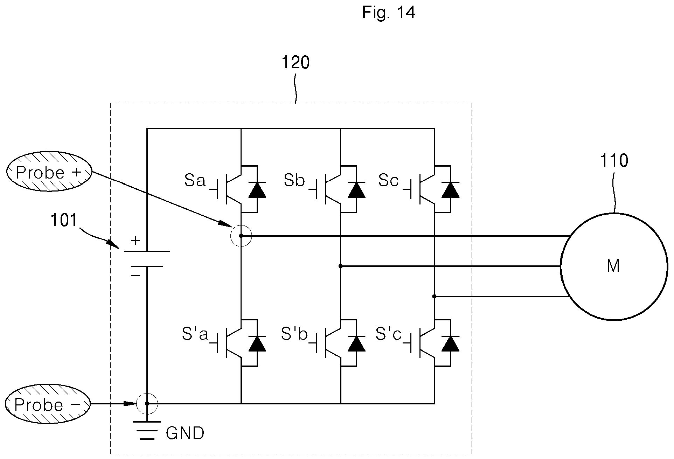

FIGS. 14 to 16 are views illustrating terminal voltage waveforms according to overmodulation compensation of the motor driving apparatus according to some embodiments of the present invention.

Referring to FIG. 14, the motor 110 of the motor driving apparatus according to some embodiments of the present invention may receive three-phase AC voltages input from the inverter 120 as described above. Here, the three-phase AC voltages may include a first-phase terminal voltage, a second-phase terminal voltage, and a third-phase terminal voltage.

A user may actually measure, using a measurer, a terminal voltage waveform output from the inverter 120 to the motor 110. For example, the user may measure the first-phase terminal voltage by allowing a probe to come into contact with a ground node GND and a node A between a first upper arm switch Sa and a first lower arm switch S'a.

Hereinafter, a result of measuring the first-phase terminal voltage will be described as an example of an overmodulation compensation operation of the control unit 130 of the present invention.

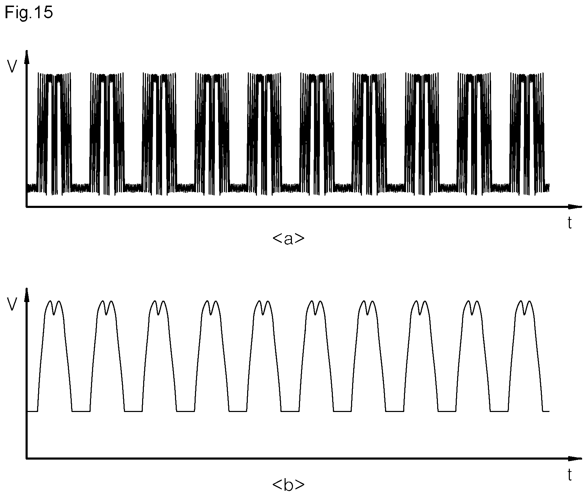

Referring to FIG. 15, graph <a> illustrates a waveform obtained by measuring a terminal voltage between the ground node GND and the node A of the inverter 120 using an oscilloscope.

Generally, as a sampled numerical value of the control unit 130 increases, a square wave-formed terminal voltage may be measured.

In order to easily analyze the measured square wave, a high frequency component may be removed using a low pass filter (LPF). In this case, it is possible to extract and analyze a wave form of a low frequency component from the square wave.

For example, graph <b> illustrates a waveform which passes through the LPF having a cutoff frequency of 10 kHz. However, the present invention is not limited thereto, and a terminal voltage waveform may be extracted using an LPF having a different cutoff frequency.

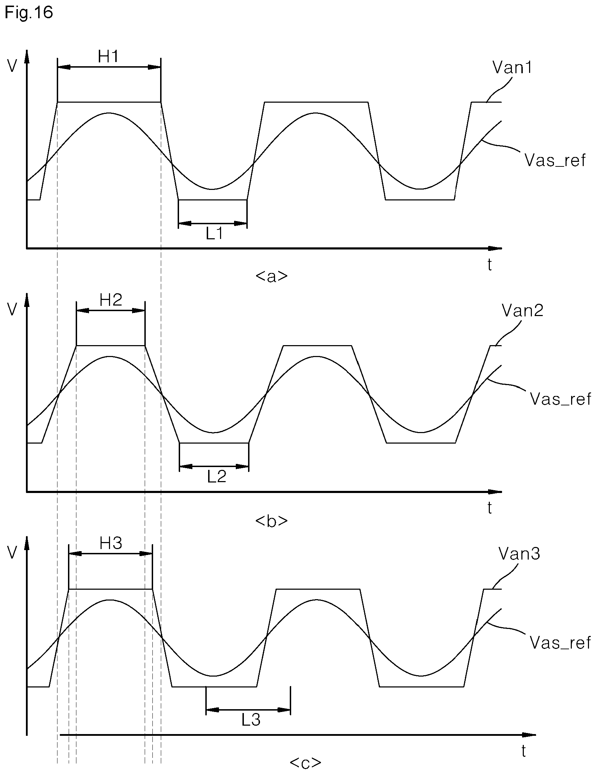

Referring to FIG. 16, graphs <a> to <c> illustrate terminal voltage waveforms van1, van2, and van3 extracted using the method described above with reference to FIGS. 14 and 15. Here, a reference voltage vas_ref is equally shown as a sine or cosine waveform in the graphs <a> to <c>. That is, the reference voltage vas ref may be used while being shown in the graphs <a> to <c> to compare changes in amplitude of the terminal voltages van1, van2, and van3.

In detail, the graph <a> illustrates a first terminal voltage waveform van1 output from the inverter 120 to the motor 110 when an overmodulated voltage occurs in the inverter 120.

The graph <a> includes a first maximum point maintenance time H1 and a first minimum point maintenance time L1. Here, the first maximum point maintenance time H1 differs from the first minimum point maintenance time L1.

For example, the first maximum point maintenance time H1 of the first terminal voltage waveform van1 may be greater than the first minimum point maintenance time L1 thereof. However, the present invention is not limited thereto, and the first maximum point maintenance time H1 of the first terminal voltage waveform van1 may be less than the first minimum point maintenance time L1 thereof.

That is, when an overmodulated voltage occurs in the inverter 120, the first maximum point maintenance time H1 of the first terminal voltage waveform van1 may differ from the first minimum point maintenance time L1 thereof.

In this case, a voltage ripple and a harmonic wave component increases in a terminal voltage output from the inverter 120 such that control performance of the motor 110 may be reduced.

The graph <b> illustrates a second terminal voltage waveform van2 output from the inverter 120 to the motor 110 when an overmodulated voltage occurs in the inverter 120 and the control unit 130 performs an in-phase overmodulation compensation operation.

That is, the graph <b> illustrates a terminal voltage waveform output from the inverter 120 to the motor 110 when the control unit 130 operates in the first mode.

The graph <b> includes a second maximum point maintenance time H2 and a second minimum point maintenance time L2. Here, the second maximum point maintenance time H2 of the second terminal voltage waveform van2 may be equal or similar to the second minimum point maintenance time L2.

However, in comparison to the graph <a>, the second maximum point maintenance time H2 may be less than the first maximum point maintenance time H1. Also, the second minimum point maintenance time L2 may be greater than the first minimum point maintenance time L1, but the present invention is not limited thereto.

Through this, when the control unit 130 uses the in-phase overmodulation compensation method, a voltage ripple and a harmonic wave component of the terminal voltage output from the inverter 120 may be reduced. Accordingly, control performance of the motor 110 of the inverter 120 may be improved.

The graph <c> illustrates a third terminal voltage waveform van3 output from the inverter 120 to the motor 110 when an overmodulated voltage occurs in the inverter 120 and the control unit 130 performs a minimum distance overmodulation compensation operation.

That is, the graph <c> illustrates a terminal voltage waveform output from the inverter 120 to the motor 110 when the control unit 130 operates in the second mode.

The graph <c> includes a third maximum point maintenance time H3 and a third minimum point maintenance time L3. Here, the third maximum point maintenance time H3 of the third terminal voltage waveform van3 may be equal or similar to the third minimum point maintenance time L3.

However, in comparison to the graph <b>, the third maximum point maintenance time H3 may be greater than the second maximum point maintenance time H2. Also, the third minimum point maintenance time L3 may be greater than the second minimum point maintenance time L2. However, the present invention is not limited thereto.

Accordingly, a duty-ratio of a terminal voltage waveform when the control unit 130 performs the minimum distance overmodulation compensation operation may be formed to be greater than a duty-ratio of a terminal voltage waveform when the control unit 130 performs the in-phase overmodulation compensation operation.

Through this, when the minimum distance overmodulation compensation method is used, an average output voltage of a terminal voltage output from the inverter 120 increases such that a driving velocity of the motor 110 may be improved and the motor 110 may operate at a high RPM.

Also, when the minimum distance overmodulation compensation method is used, a voltage ripple and a harmonic wave component of the terminal voltage output from the inverter 120 are reduced further than when not used such that control performance of the motor 110 may be improved.

## Claims

1. A motor driving apparatus comprising:
an inverter (120) configured to drive a motor (110) using an alternating current (AC) voltage; and
a control unit (130) configured to control an operation of a switching element included in the inverter (120),
wherein the control unit (130) is configured to: generate one of first and second compensation values which differ from each other according to an instruction velocity (ωr) corresponding to an input target instruction value; **characterised in that** the control unit is further configured to compensate an output voltage instruction value vector (V_ref) used in controlling of the inverter (120) using one of the first and second compensation values when the output voltage instruction value vector exceeds a predetermined space vector region (310);
and output a PWM signal
controlling the operation of the switch elements of the inverter (120), based on the compensated output voltage instruction value vector,
wherein the control unit (130) is configured to operate in one of a first mode and a second mode which differ from each other according to the instruction velocity corresponding to the input target instruction value,
wherein in the first mode when the instruction velocity (ωr) is less than or equal to a predetermined velocity reference value (ωr_limit; S120), the first compensation value for reducing a size of the output voltage instruction value vector while maintaining a phase of the output voltage instruction value vector is generated, and
wherein in the second mode when the instruction velocity (ωr) is greater than the predetermined velocity reference value (ωr_limit; S120), the second compensation value for compensating the output voltage instruction value vector with a minimum distance point (P2) between the output voltage instruction value vector and the space vector region (310) is generated.

2. The motor driving apparatus of claim 1,wherein the control unit preferably operates in the first mode when the instruction velocity is less than or equal to a current velocity of the motor measured by the control unit and operates in the second mode when the instruction velocity is greater than the current velocity of the motor measured by the control unit.

3. The motor driving apparatus of claim 1, wherein the control unit comprises:
a voltage instruction generation portion configured to generate a first voltage instruction value;
a torque instruction generation portion configured to generate a torque instruction value on the basis of the current velocity of the motor and the instruction velocity;
a power instruction generation portion configured to calculate an output power instruction value on the basis of the torque instruction value and an input terminal voltage of the inverter; and
a power controller configured to generate a compensation voltage instruction value on the basis of the output power instruction value and the first voltage instruction value, and
wherein a vector of the output voltage instruction value is a sum of a vector of the first voltage instruction value and a vector of the compensation voltage instruction value,
wherein the control unit preferably operates in the first mode when the output power instruction value is less than or equal to a predetermined output power reference value and operates in the second mode when the output power instruction value is greater than the predetermined output power reference value.

4. The motor driving apparatus of claim 1, a rotational velocity of the motor in the second mode is higher than a rotational velocity of the motor in the first mode.

5. The motor driving apparatus of claim 1, wherein the output voltage instruction value vector is located on a boundary of the space vector region, and
wherein a size of the output voltage instruction value vector in the second mode is greater than or equal to a size of the output voltage instruction value vector in the first mode.

6. The motor driving apparatus of claim 1, wherein when the output voltage instruction value vector is located in the space vector region, the control unit does not perform an operation of the in-phase overmodulation compensation or an operation of the minimum distance overmodulation compensation.

7. The motor driving apparatus of claim 1, wherein in the first mode or the second mode, overmodulation compensation is performed so that a maximum point maintenance time is to be equal to a minimum point maintenance time at a terminal voltage waveform output from the inverter to the motor,
wherein a maximum point maintenance time or a minimum point maintenance time of the terminal voltage waveform measured in the second mode is preferably formed to be greater than a maximum point maintenance time or a minimum point maintenance time of the terminal voltage waveform measured in the first mode, and/or
wherein a duty-ratio of the terminal voltage waveform measured in the second mode is preferably formed to be greater than a duty-ratio of the terminal voltage waveform measured in the first mode.

8. The motor driving apparatus of claim 1, wherein the control unit operates in the second mode when the current velocity of the motor or an instruction velocity is higher than or equal to 80 krpm.

## Patentansprüche

1. Motorantriebsvorrichtung mit:
einem Wechselrichter (120), der für den Antrieb eines Motors (110) mit Wechselstrom (AC) konfiguriert ist; und
einer Steuereinheit (130), die zur Steuerung eines Betriebs eines im Wechselrichter (120) enthaltenen Schaltelements konfiguriert ist,
wobei die Steuereinheit (130) so konfiguriert ist, dass sie entweder einen ersten oder zweiten Kompensationswert erzeugt, die sich gemäß einer Sollgeschwindigkeit (ωr), die einem eingegebenen Zielsollwert entspricht, voneinander unterscheiden;
**dadurch gekennzeichnet, dass** die Steuereinheit ferner so konfiguriert ist, dass sie einen Ausgangsspannungs-Sollwertvektor (V_ref), der zur Steuerung des Wechselrichters (120) verwendet wird, unter Verwendung entweder eines ersten oder zweiten Kompensationswerts kompensiert, wenn der Ausgangsspannungs-Sollwertvektor einen vorgegebenen Raumvektorbereich (310) überschreitet; und ein PWM-Signal ausgibt, das den Betrieb der Schaltelemente des Wechselrichters (120) basierend auf dem kompensierten Ausgangsspannungs-Sollwertvektor steuert,
wobei die Steuereinheit (130) so konfiguriert ist, dass sie entweder in einem ersten Modus oder in einem zweiten Modus arbeitet, die sich entsprechend der Sollgeschwindigkeit, die dem eingegebenen Zielsollwert entspricht, voneinander unterscheiden,
wobei im ersten Modus, wenn die Sollgeschwindigkeit (ωr) kleiner oder gleich einem vorbestimmten Geschwindigkeitsreferenzwert (ωr_limit; S120) ist, der erste Kompensationswert zum Verringern einer Größe des Ausgangsspannungs-Sollwertvektors unter Beibehaltung einer Phase des Ausgangsspannungs-Sollwertvektors erzeugt wird, und
wobei im zweiten Modus, wenn die Sollgeschwindigkeit (ωr) größer als der vorbestimmte Geschwindigkeitsreferenzwert (ωr_limit; S120) ist, der zweite Kompensationswert zum Kompensieren des Ausgangsspannungs-Sollwertvektors mit einem Mindestabstandspunkt (P2) zwischen dem Ausgangsspannungs-Sollwertvektor und dem Raumvektorbereich (310) erzeugt wird.

2. Motorantriebsvorrichtung nach Anspruch 1, wobei die Steuereinheit vorzugsweise im ersten Modus arbeitet, wenn die Sollgeschwindigkeit kleiner oder gleich einer von der Steuereinheit gemessenen aktuellen Geschwindigkeit des Motors ist, und im zweiten Modus arbeitet, wenn die Sollgeschwindigkeit größer als die von der Steuereinheit gemessene aktuelle Geschwindigkeit des Motors ist.

3. Motorantriebsvorrichtung nach Anspruch 1, wobei die Steuereinheit umfasst:
einen Sollspannungs-Erzeugungsteil, der so konfiguriert ist, dass er einen ersten Spannungssollwert erzeugt;
einen Solldrehmoment-Erzeugungsteil, der so konfiguriert ist, dass er einen Drehmomentsollwert auf der Grundlage der aktuellen Geschwindigkeit des Motors und der Sollgeschwindigkeit erzeugt;
einen Sollleistungs-Erzeugungsteil, der so konfiguriert ist, dass er einen Ausgangsleistungssollwert auf der Grundlage des Drehmomentsollwertes und einer Eingangsklemmenspannung des Wechselrichters berechnet; und
einen Leistungsregler, der so konfiguriert ist, dass er einen Kompensationsspannungssollwert auf der Grundlage des Ausgangsleistungssollwertes und des ersten Spannungssollwertes erzeugt, und
wobei ein Vektor des Ausgangsspannungs-Sollwertes eine Summe aus einem Vektor des ersten Spannungssollwertes und einem Vektor des Kompensationsspannungssollwertes ist,
wobei die Steuereinheit vorzugsweise im ersten Modus arbeitet, wenn der Ausgangsleistungssollwert kleiner oder gleich einem vorgegebenen Ausgangsleistungsreferenzwert ist, und im zweiten Modus arbeitet, wenn der Ausgangsleistungssollwert größer als der vorgegebene Ausgangsleistungsreferenzwert ist.

4. Motorantriebsvorrichtung nach Anspruch 1, wobei eine Drehgeschwindigkeit des Motors im zweiten Modus höher ist als eine Drehgeschwindigkeit des Motors im ersten Modus.

5. Motorantriebsvorrichtung nach Anspruch 1, wobei der Ausgangsspannungs-Sollwertvektor an einer Grenze des Raumvektorbereichs liegt, und
wobei eine Größe des Ausgangsspannungs-Sollwertvektors im zweiten Modus größer oder gleich einer Größe des Ausgangsspannungs-Sollwertvektors im ersten Modus ist.

6. Motorantriebsvorrichtung nach Anspruch 1, wobei, wenn der Ausgangsspannungs-Sollwertvektor in dem Raumvektorbereich liegt, die Steuereinheit keine Kompensation der phasengleichen Übermodulation oder Kompensation der Übermodulation im Mindestabstand durchführt.

7. Motorantriebsvorrichtung nach Anspruch 1, wobei im ersten Modus oder im zweiten Modus die Übermodulationskompensation so durchgeführt wird, dass eine Maximalpunkt-Haltezeit gleich einer Minimalpunkt-Haltezeit bei einer Klemmenspannungswellenform ist, die von dem Wechselrichter an den Motor ausgegeben wird,
wobei eine Maximalpunkt-Haltezeit oder eine Minimalpunkt-Haltezeit der Klemmenspannungs-Wellenform, die im zweiten Modus gemessen wird, vorzugsweise so ausgebildet ist, dass sie größer ist als eine Maximalpunkt-Haltezeit oder eine Minimalpunkt-Haltezeit der Klemmenspannungs-Wellenform, die im ersten Modus gemessen wird, und/oder
wobei eine relative Einschaltdauer der im zweiten Modus gemessenen Klemmenspannungskurve vorzugsweise so ausgebildet ist, dass sie größer ist als eine relative Einschaltdauer der im ersten Modus gemessenen Klemmenspannungskurve.

8. Motorantriebsvorrichtung nach Anspruch 1, wobei die Steuereinheit im zweiten Modus arbeitet, wenn die aktuelle Geschwindigkeit des Motors oder eine Sollgeschwindigkeit größer oder gleich 80 krpm ist.

## Revendications

1. Appareil d'entraînement de moteur comprenant:
un onduleur (120) configuré pour entraîner un moteur (110) à l'aide d'une tension en courant alternatif (CA); et
une unité de commande (130) configurée pour commander un fonctionnement d'un élément de commutation inclus dans l'onduleur (120),
dans lequel l'unité de commande (130) est configurée pour: générer l'une de première et seconde valeurs de compensation qui diffèrent l'une de l'autre selon une vitesse d'instruction (ωr) correspondant à une valeur d'instruction cible d'entrée; **caractérisé en ce que** l'unité de commande est configurée en outre pour compenser un vecteur de valeur d'instruction de tension de sortie (V ref) utilisé dans la commande de l'onduleur (120) à l'aide de l'une des première et seconde valeurs de compensation lorsque le vecteur de valeur d'instruction de tension de sortie dépasse une région de vecteurs de l'espace prédéterminée (310);
et émettre un signal MLI commandant le fonctionnement des éléments de commutation de l'onduleur (120), sur la base du vecteur de valeur d'instruction de tension de sortie compensé,
dans lequel l'unité de commande (130) est configurée pour fonctionner dans l'un d'un premier mode et d'un second mode qui diffèrent l'un de l'autre selon la vitesse d'instruction correspondant à la valeur d'instruction cible d'entrée,
dans lequel, dans le premier mode, lorsque la vitesse d'instruction (ωr) est inférieure ou égale à une valeur de référence de vitesse prédéterminée (ωr_limit; S120), la première valeur de compensation pour réduire une taille du vecteur de valeur d'instruction de tension de sortie tout en maintenant une phase du vecteur de valeur d'instruction de tension de sortie est générée, et
dans lequel, dans le second mode, lorsque la vitesse d'instruction (ωr) est supérieure à la valeur de référence de vitesse prédéterminée (ωr_limit; S120), la seconde valeur de compensation pour compenser le vecteur de valeur d'instruction de tension de sortie avec un point de distance minimale (P2) entre le vecteur de valeur d'instruction de tension de sortie et la région de vecteurs de l'espace (310) est générée.

2. Appareil d'entraînement de moteur selon la revendication 1, dans lequel l'unité de commande fonctionne de préférence dans le premier mode lorsque la vitesse d'instruction est inférieure ou égale à une vitesse actuelle du moteur mesurée par l'unité de commande et fonctionne dans le second mode lorsque la vitesse d'instruction est supérieure à la vitesse actuelle du moteur mesurée par l'unité de commande.

3. Appareil d'entraînement de moteur selon la revendication 1, dans lequel l'unité de commande comprend:
une partie de génération d'instruction de tension configurée pour générer une première valeur d'instruction de tension;
une partie de génération d'instruction de couple configurée pour générer une valeur d'instruction de couple sur la base de la vitesse actuelle du moteur et de la vitesse d'instruction;
une partie de génération d'instruction de puissance configurée pour calculer une valeur d'instruction de puissance de sortie sur la base de la valeur d'instruction de couple et d'une tension aux bornes d'entrée de l'onduleur; et
un organe de commande de puissance configuré pour générer une valeur d'instruction de tension de compensation sur la base de la valeur d'instruction de puissance de sortie et de la première valeur d'instruction de tension, et
dans lequel un vecteur de la valeur d'instruction de tension de sortie est une somme d'un vecteur de la première valeur d'instruction de tension et d'un vecteur de la valeur d'instruction de tension de compensation,
dans lequel l'unité de commande fonctionne de préférence dans le premier mode lorsque la valeur d'instruction de puissance de sortie est inférieure ou égale à une valeur de référence de puissance de sortie prédéterminée et fonctionne dans le second mode lorsque la valeur d'instruction de puissance de sortie est supérieure à la valeur de référence de puissance de sortie prédéterminée.

4. Appareil d'entraînement de moteur selon la revendication 1, dans lequel une vitesse de rotation du moteur dans le second mode est supérieure à une vitesse de rotation du moteur dans le premier mode.

5. Appareil d'entraînement de moteur selon la revendication 1, dans lequel le vecteur de valeur d'instruction de tension de sortie est situé sur une limite de la région de vecteurs de l'espace, et
dans lequel une taille du vecteur de valeur d'instruction de tension de sortie dans le second mode est supérieure ou égale à une taille du vecteur de valeur d'instruction de tension de sortie dans le premier mode.

6. Appareil d'entraînement de moteur selon la revendication 1, dans lequel lorsque le vecteur de valeur d'instruction de tension de sortie est situé dans la région de vecteurs de l'espace, l'unité de commande ne réalise pas une opération de la compensation de surmodulation en phase ou une opération de la compensation de surmodulation à distance minimale.

7. Appareil d'entraînement de moteur selon la revendication 1, dans lequel, dans le premier mode ou le second mode, une compensation de surmodulation est réalisée de telle sorte qu'un temps de maintien de point maximum soit égal à un temps de maintien de point minimum au niveau d'une sortie de forme d'onde de tension aux bornes de l'onduleur au moteur,
dans lequel un temps de maintien de point maximum ou un temps de maintien de point minimum de la forme d'onde de tension aux bornes mesuré dans le second mode est de préférence formé pour être supérieur à un temps de maintien de point maximum ou à un temps de maintien de point minimum de la forme d'onde de tension aux bornes mesuré dans le premier mode, et/ou
dans lequel un rapport cyclique de la forme d'onde de tension aux bornes mesuré dans le second mode est de préférence formé pour être supérieur à un rapport cyclique de la forme d'onde de tension aux bornes mesuré dans le premier mode.

8. Appareil d'entraînement de moteur selon la revendication 1, dans lequel l'unité de commande fonctionne dans le second mode lorsque la vitesse actuelle du moteur ou une vitesse d'instruction est supérieure ou égale à 80 ktr/min.
